# EUROPEAN PATENT SPECIFICATION

(11) **EP 2 850 356 B1**
(45) Date of publication and mention of the grant of the patent: **10.05.2017**
(21) Application number: 14748291.3
(22) Date of filing: 06.06.2014
(51) Int. Cl.: E03B 7/07, F16L 55/052, F24D 3/10

(54) **PRE-CHARGED EXPANSION TANK**
VORGELADENER EXPANSIONSTANK
RÉSERVOIR DE DILATATION PRÉCHARGÉ

(30) Priority: 07.06.2013 IT VI20130150
(43) Date of publication of application: 25.03.2015
(73) Proprietor: Zilio Industries S.r.l., 36050 Friola di Pozzoleone (VI) (IT)
(72) Inventor: ZILIO, Simone, I-36050 Friola dl Pozzoleone (VI) (IT)
(74) Representative: Burchielli, Riccardo
(86) International application number: PCT/IT2014/000158
(87) International publication number: WO 2014/195987

(56) References cited:
- EP-A2- 1 657 133
- WO-A1-01/63373
- GB-A- 1 207 390

## Description

The present invention relates to an expansion tank. In particular, the present invention relates to a pre-charged expansion tank especially for hot water heating plants or devices. Therefore the present invention is set in the field of components for air or hydraulic devices.

Nowadays, conventional expansion tanks comprise two mutually crimped dome-shaped shells that form the tank body.

Between the dome-shaped shells a membrane is provided which delimits the tank body into two adjacent compartments.

The membrane is deformable for maintaining the pressure balance between the fluids contained in the compartments.

This traditional expansion tank is integrated in a hydraulic system, when in use, the first compartment being in communication with the hydraulic circuit, and the other compartment being occupied by a pressurized gas, which usually is air.

During the operation, a liquid pressure variation in the hydraulic system is compensated by the expansion tank.

Indeed, in the expansion tank, the compartment which is in communication with the hydraulic circuit is free to expand reducing the volume of the compartment occupied by the gas, by deforming the membrane.

Safe for the elastic force of the membrane, the gas pressure is in equilibrium with the pressure of the liquid, which, therefore, will occupy more volume in the body of the tank the greater will be its pressure.

A drawback of this traditional expansion tank consists in that it tends to discharge, ie the gas contained within the body of the tank tends to loose pressure thus loocompromising its elastic reaction to the liquid volume changes.

This effect determines a loss of efficiency life of such traditional expansion tank, which requires numerous maintenance interventions or substitutions of the tank during the life of the plant equipped with such tank.
An expansion tank according to the preamble of claim 1 is known from WO 0163373 A1, in this document the expansion tank is associated to a shutter device.
The problem underlying the present invention is to improve the durability of the efficiency of the expansion tanks. A solution for avoiding cracks in a membrane is provided by EP 1657133 A2 which discloses an expansion tank equipped with a thick membrane which is devoid of any projection.
Main task of the present invention is to provide an expansion tank which provides a solution to this problem by avoiding the drawbacks of the traditional expansion tank above described.

Within this aim, it is an object of the present invention to provide for an expansion tank that avoids the need of re-charging operations. Another object of the present invention is to provide an expansion tank which allows to set the preload force acting on the membrane. Another object of the present invention consists in providing for an expansion tank that allows to regulate the preload force.

A further object of the present invention is to provide for an expansion tank which is structurally simpler than the traditional ones. This aim and these and other objects that will become clear hereinafter are achieved by an expansion tank according to appended independent claim.

Detail features of the expansion tank according to the invention are disclosed in the dependent claims which are here incorporated by reference.

An expansion tank according to the invention allows to avoid during the tank life in operation the re-charging operation required by traditional tanks.

It also requires less maintenance compared to traditional expansion tanks as it does not requires gas or air refills.

Moreover, the force exerted on the membrane is easy to be regulated so that it is easy to regulate the fluid pressure at which the membrane moves and the tank become operative.

The expansion tank according to the invention is also more compact than traditional tanks, since it allows to set for the thrust means a high preload force, moreover, does not necessarily require the use of two shells, as otherwise occurs in traditional tanks.

An expansion tank according to the invention have a long life in efficiency.

Moreover, the use in a hydraulic system of an expansion tank according to the invention reduces the risk of infiltration of air into the hydraulic circuit.

In particular, an expansion tank according to the invention allows to avoid the air penetration through the membrane in the gas compartment of traditional expantion tanks.

Further features and advantages of the present invention will become clearer from the description of a preferred embodiment, given as a non-limiting example, of an expansion t6ank according to the invention, which is illustrated only by way of non-limitative example in the attached drawings, in which:

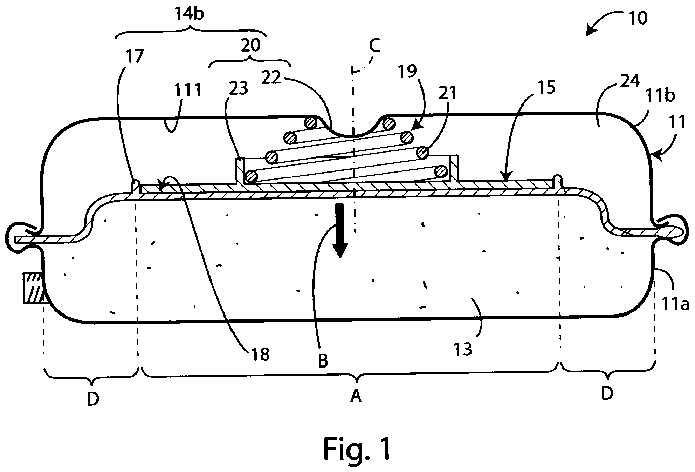

- Figure 1 shows a schematic cross section of an expansion tank according to the invention;

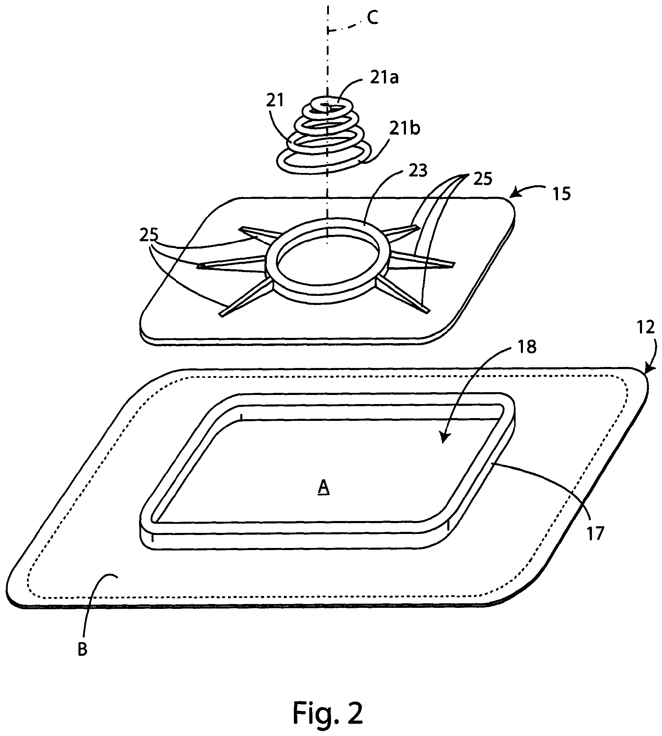

- Figure 2 shows some components of an expansion tank according to the invention in exploded perspective view;
- Figure 3 shows an enlarged cross section of a detail of the expansion tank of Figure 1.

With particular reference to the above figures, is globally indicated with 10 an expansion tank which, according to the invention, has a peculiarity in that in that it comprises:
- a body 11;
- a membrane 12 fixed to the body 11 and delimiting a compartment 13 within the body 11 adapted to contain a liquid, particularly water, the membrane 12 being adapted to deform in response to changes of pressure of the liquid which, in use, is contained in the compartment 13;
- thrust means 14a, mechanically connected to said membrane 12 and to said body 11, to exert on at least one predefined and limited operative potion A of said membrane 12 a predetermined force B having a stress direction C predefined with respect to said body 11;
- guide means, gobally indicated by reference 14b, connected to body 11 and to membrane 12 to guide the operative portion A with respect to the body 11.

The guide means 14b are suitable to guide a displacement of the operating portion A of the membrane 12 along a predetermined trajectory so that, during use of the expansion tank 10, the membrane 12 maintains a structure that provides for optimal operation of the operating portion A which preferably is kept equidistant from the side walls of body 11. The expansion tank 10 according to the invention comprises a reinforcing element 15, connected to the operating portion A of the membrane 12 or made in one body with the latter. The operational potion A of membrane 12 is advantageously central to the latter and is engaged by and preferably covered by reinforcement 15. The membrane 12 also includes a connecting portion D which is peripheral to the operating portion A and connected to the latter and to the body 11.

The guide means 14b comprise retaining means connected to the operating portion A and to reinforcing element 15 to counteract sliding motions of the latter on the operating portion A along any direction perpendicular to the stress direction C.

The retaining means comprise a frame 17 projecting from one face of the membrane 12.

The frame 17 delimits perimetrically the operating portion A and, with the latter, defines a seat 18 which is shaped so as to mate with reinforcing element 15.

The membrane 12 has, in correspondence of the frame 17, a greater flexural strength to limit the bending of the membrane 12 along the peripheral edge of the reinforcement element 15, such bending being due, in use, to the thrust action of the pressurized liquid. Advantageously, said greater flexural strength is conferred by the frame 17 which is preferably in one body with the membrane 12.

In particular, in use, the thrust of the liquid on the membrane exerts a stress on the membrane that is transmitted by the frame 17, in the area where it is provided, so that it is preferably transmitted on the peripheral edge of the reinforcing element 15, on which the frame 17 rests.

In more detail, the thrust means 14a preferably comprise at least a resilient thrust element 19 which can yield along a deformation direction and is otherwise rigid along directions perpendicular to said deformation direction.

The guide means 14b advantageously comprise connecting means 20 which connect the thrust element 19 to body 11 and to membrane 12 and are suitable to maintain a fixed orientation of the deformation direction with respect to body 11 and to membrane 12.

The connection means 20 are advantageously configured so as to guide the displacement of the operating portion A of the membrane 12 relative to body 11 along the deformation direction of the thrust element 19, which displacement in use is induced by a change of the pressure of the liquid contained in compartment 13.

In other words, the connection means 20 and the thrust element 19 cooperate in countering a displacement of the operating portion 12 A of the membrane 12, perpendicular to the preset stress direction C. According to the embodiment illustrated in the accompanying drawings, according to which the membrane 12, when it is in a rest condition, the operating portion A that is substantially flat, the connection means 20 and the thrust element 19 cooperate to counteract any slipping of the reinforcing element 15 and of the operating portion A in any direction parallel to the latter.

Preferably in this embodiment, the stress direction C is substantially perpendicular to the operating portion A of the membrane 12. Advantageously, the deformation direction of the reinforcing element 15 defines the stress direction C.

The thrust element 19 preferably comprises a helical spring 21, and the connection means 20 advantageously comprises:
- a male element 22 fixed to the body 11, or integral with the latter, and inserted into at least one end coil of a first end 21 a of the spring 21;
- a circular collar 23 fixed to the reinforcement 15 or preferably integral with the latter and coupled with at least one end coil of a second end 21 b of the spring 21.

The male element 22 and the collar 23 are advantageously configured to counteract any oscillation of the ends of the spring 21 above an axis perpendicular to the deformation direction of the thrust element 19.

Preferably, it will be provided means for mechanical adjustment of the preload of the spring 21, in a per se conventional way and not illustrated or described.

The preload of an expansion tank according to the invention can therefore be adjusted by mechanical means and not by pneumatic as in traditional tanks, thus obtaining a greater durability of the preload calibration and a higher reliability of an expansion tank according the present invention, compared to the traditional ones. The helical spring 21 is advantageously a conical spring having a packed configuration in which each coil is housed internally to an adjacent one to minimize the bulk of the spring in the deformation direction.

In other words, the spring 21 is advantageously constituted by a filiform element made of an elastic material shaped as a conical helix in such a way that, when the spring 21 is in the packed configuration, it has the same thickness of the filiform element.

The reinforcing element 15 is preferably plate-shaped and has a first face abuting on the operating portion A of the membrane 12 and a second face provided with the collar 23.

In more detail, the body 11 advantageously comprises:
- a first dome-shaped shell 11 a;
- a second dome-shaped shell 11 b perimetrically fixed to the first shell 11 a and to membrane 12.

The membrane 12, preferably delimits the compartment 13 in cooperation with the first dome-shaped shell 11 a, and defines, in cooperation with the second dome-shaped shell 11 b, a chamber 24 in which are housed the thrust means 14a.

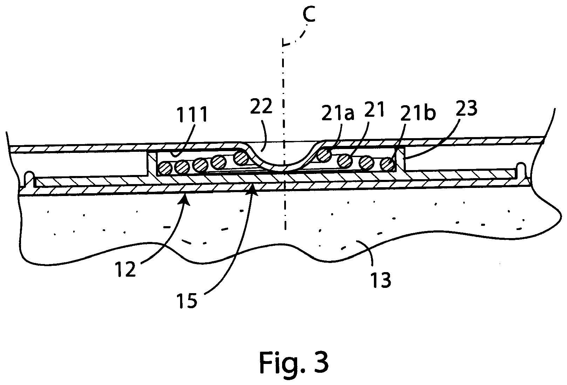

Advantageously, the expansion tank 10 has a configuration of maximum expansion of the liquid in which the reinforcing element 15 has the collar 23 abuting against a bottom wall 111 of the body 11 and the spring 21 is compressed so as to be completly housed by the cavity delimited by collar 23, as illustrated, merely by way of example, in Figure 3.

In this case, an expansion tank 10 according to the invention, in the above configuration of maximum expansion of the liquid, has a bulk that is determined for about 90% by the volume of the compartment occupied by liquid and only about 10% by volume dedicated to the chamber which receives the compressed spring 21.

While traditional expansion tanks, in a similar configuration of maximum expansion of the liquid have a bulk determined, for about 70%, by the liquid volume and for about 30% by the volume of the air or gas compressed by the liquid.

Therefore an expansion tank according to the invention is more compact.

Preferably, the reinforcing element has stiffening ribs 25 connected to the collar 23 and advantageously arranged radially around the latter.

During operation of the expansion tank 10 the membrane 12 may deform, particularly under action of the pressure of the liquid contained in the compartment 13.

This pressure is balanced by the force of the spring 21.

In case of pressure variations, the spring 21 extends or shortens for compensating the thrust on membrane 12 and the reinforcing element approaches to or retreats from the bottom wall 11 of the body 11 accordingly. Preferably, the expansion tank 10 is configured such that the guide means 14b hold the reinforcing element 15 substantially parallel to the bottom wall 111.

The invention thus conceived is susceptible of numerous modifications and variations, all within the scope of protection of the appended claims. For example it can be provided a plurality of springs acting on a same reinforcing element, or a plurality of reinforcing elements on each of these one or more springs acting.

The springs can clearly be replaced by equivalent elastic elements.

It is clear that, instead of in the operating chamber, the thrust means and the guide means may be accommodated, mutatis mudandis, in the compartment of the body of the expansion tank, thus allowing to avoid the use of the second dome-shaped shell.

## Claims

1. Expansion tank (10) comprising
- a body (11);
- a membrane (12) fixed to said body (11) and defining a compartment (13) internal to said body (11) adapted to contain a liquid, said membrane (12) being adapted to deform in response to changes of pressure of the liquid which, in use, is contained in said compartment (13);
- thrust means (14a), mechanically connected to said membrane (12) and to said body (11), to exert on at least a preset operative portion (A) of said membrane (12) a predetermined force (B) having a stress direction (C) predefined with respect to said body (11);
- guide means (14b) connected to said body (11) and to said membrane (12) for guiding said operative portion (A) with respect to said body (11);
- a reinforcing element (15) connected to or integral with the operative portion (A) of said membrane (12);
wherein the operative portion (A) of said membrane (12) is engaged by said reinforcing element (15) and said membrane (12) further comprises a connecting portion (D) extending along the perimeter of said operative portion (A) and connected to the latter and to said body (11), said guide means (14b) comprising retaining means connected to said operative portion (A) and said reinforcing element (15) for counteract the sliding of the latter with respect to said operative portion (A) along a direction perpendicular to said stress direction (C); **characterised in that** said retaining means comprise a frame (17) projecting from one face of said membrane (12), perimetric to said operative portion (A) and defining a seat (18) which is shaped to said reinforcing element (15) to mate with the latter, said membrane (12) having, in correspondence of said frame (17), a greater flexural strength.

2. Expansion tank according to claim 1 **characterized in that**:
- said thrust means (14a) comprise at least a thrust element (19) elastically yielding along a deformation direction and rigid along directions perpendicular to said deformation direction;
- said guide means (14b) comprise connection means (20), connecting said at least one thrust element (19) to said body (11) and to said membrane (12) and suitable to maintain a fixed orientation of the said deformation direction with respect to said body (11) and said membrane (12) for guiding, along said deformation direction, the displacement of the operating portion (A) of said membrane (12) with respect to said body (11), induced by a change pressure of the liquid which, in use, is contained in said compartment (13);
said deformation direction defining said stress direction (C).

3. Expansion tank according to claim 2, **characterized in that** said at least one thrust element (19) comprises an helical spring (21), said connection means (20) comprising:
- a male element (22) fixed to or integral with said body (11) and inserted in at least one terminal coil of a first end (21 a) of said spring (21);
- a collar (23) circular fixed or integral with said reinforcing element (15) and coupled with at least one terminal coil of a second end (21 b) of said spring (21);
said male element (22) and said collar (23) being configured to counteract the oscillation of the ends of said spring (21) about an axis perpendicular to said deformation direction.

4. Expansion tank according to claim 3 **characterized in that** it comprises means for adjusting the preload of said spring (21).

5. Expansion tank according to one of claims 3 and 4 **characterized in that** said spring (21) is a helical spring (21) is conical and has a packed configuration in which each of its coil is housed in a coil adjacent coil to minimize its size in the deformation direction.

6. Expansion tank according to one of claims 3 to 5, **characterized in that** said reinforcing element (15) is a plate-like element that has a first face in abutment on the operating portion ( A) of said membrane (12) and a second face provided with said collar (23).

7. Expansion tank according to one of the preceding claims **characterized in that** said body (11) comprises:
- a first calotte (11 a);
- a second calotte (11 b) peripherally fixed to said first calotte (11 a) and said membrane (12);
said membrane (12) delimits with said first calotte (11 a) delimits said compartment (13) for the liquid and with said second calotte (11 b) delimiting an operative chamber (24) in which are housed said thrust means (14a).

## Patentansprüche

1. Expansionstank (10), umfassend
- einen Körper (11);
- eine Membran (12), die am Körper (11) befestigt ist und eine Kammer (13) im Innern des Körpers (11) definiert, die ausgebildet ist, eine Flüssigkeit zu enthalten, wobei die Membran (12) ausgebildet ist, sich als Antwort auf Druckveränderungen der Flüssigkeit, die im Gebrauch in der Kammer (13) enthalten ist, zu verformen;
- Schiebemittel (14a), die mechanisch mit der Membran (12) und dem Körper (11) verbunden sind, um auf zumindest einen vorgegebenen operativen Bereich (A) der Membran (12) eine vorbestimmte Kraft (B) auszuüben, die eine in Bezug auf den Körper (11) vordefinierte Belastungsrichtung (C) hat;
- ein Führungsmittel (14b), das mit dem Körper (11) und mit der Membran (12) zur Führung des operativen Bereichs (A) in Bezug auf den Körper (11) verbunden ist;
- ein Verstärkungselement (15), das mit dem operativen Bereich (A) der Membran (12) verbunden ist oder einstückig mit diesem ausgebildet ist;
wobei der operative Bereich (A) der Membran (12) sich im Eingriff mit dem Verstärkungselement (15) befindet und wobei die Membran (12) ferner einen Verbindungsbereich (D) umfasst, der sich entlang der Umfangslänge des operativen Bereichs (A) erstreckt und mit Letzterem und dem Körper (11) verbunden ist, wobei die Führungsmittel (14b) ein Haltemittel umfassen, das mit dem operativen Bereich (A) und dem Verstärkungselement (15) verbunden ist, um der Verschiebung des Letzteren in Bezug auf den operativen Bereich (A) längs einer Richtung, die senkrecht zu der Belastungsrichtung (C) ist, entgegenzuwirken;
**dadurch gekennzeichnet, dass**
das Haltemittel einen Rahmen (17) umfasst, der von einer Seite der Membran (12) herausragt und einen Sitz (18) definiert, der in Bezug auf das Verstärkungselement (15) so geformt ist, dass er mit diesem zusammen passt, wobei die Membran (12) in Bezug auf den Rahmen (17) eine größere Biegefestigkeit aufweist.

2. Expansionstank nach Anspruch 1, **dadurch gekennzeichnet, dass**:
- das Schiebemittel (14a) zumindest ein Schiebeelement (19) umfasst, das elastisch nachgiebig entlang einer Deformationsrichtung ist und steif entlang Richtungen ist, die senkrecht zu dieser Deformationsrichtung sind;
- das Führungsmittel (14b) ein Verbindungsmittel (20) umfasst, das das zumindest eine Schiebeelement (19) mit dem Körper (11) und der Membran (12) verbindet und geeignet ist, um eine feste Orientierung der Deformationsrichtung bezüglich des Körpers (11) und der Membran (12) aufrecht zu erhalten, zur Führung, entlang der Deformationsrichtung, der Verlagerung des operativen Bereichs (A) der Membran (12) in Bezug auf den Körper (11), bedingt durch eine Druckveränderung der Flüssigkeit, die sich im Gebrauch in der Kammer (13) befindet;
wobei die Deformationsrichtung die Belastungsrichtung (C) definiert.

3. Expansionstank nach Anspruch 2, **dadurch gekennzeichnet, dass** das zumindest eine Schiebeelement (19) zumindest eine Schraubenfeder (21) umfasst, wobei die Verbindungsmittel (20) umfassen:
- ein männliches Element (22), das am Körper (11) befestigt ist oder einstückig mit diesem ausgeführt ist und das in zumindest eine Endwindung eines ersten Endes (21a) der Feder (21) eingefügt ist;
- einen Kragen (23), der kreisförmig an dem Verstärkungselement (15) befestigt ist oder einstückig mit diesem ausgeführt ist und der mit zumindest einer Endwindung eines zweiten Endes (21b) der Feder (21) gekoppelt ist;
wobei das männliche Element (22) und der Kragen (23) konfiguriert sind, um der Oszillation der Enden der Feder (21) um eine Achse senkrecht zu der Deformationsrichtung entgegenzuwirken.

4. Expansionstank nach Anspruch 3, **dadurch gekennzeichnet, dass** der Expansionstank Mittel zur Anpassung der Vorspannkraft der Feder (21) umfasst.

5. Expansionstank nach einem der Ansprüche 3 und 4, **dadurch gekennzeichnet, dass** die Feder (21) eine Schraubenfeder (21) ist, die konisch ist und die eine gepackte Konfiguration aufweist, in der jede ihrer Windungen in einer angrenzenden Windung untergebracht ist, um ihre Größe in der Deformationsrichtung zu minimieren.

6. Expansionstank nach einem der Ansprüche 3 bis 5, **dadurch gekennzeichnet, dass** das Verstärkungselement (15) ein plattenförmiges Element ist, mit einer ersten Seite in Anlage auf dem operativen Bereich (A) der Membran (12) und mit einer zweiten Seite für den Kragen (23).

7. Expansionstank nach einem der vorhergehenden Ansprüche, **dadurch gekennzeichnet, dass** der Körper (11) umfasst:
- eine erste Kalotte (11a);
- eine zweite Kalotte (11b), die peripher an der ersten Kalotte (11a) und der Membran (12) befestigt ist;
wobei die Membran (12) mit der ersten Kalotte (11a) die Kammer (13) für die Flüssigkeit abgrenzt und mit der zweiten Kalotte (11b) eine operative Kammer (24) abgrenzt, in der das Schiebemittel (14a) untergebracht ist.

## Revendications

1. Réservoir de détente (10) comprenant :
- un corps (11) ;
- une membrane (12) fixée audit corps (11) et définissant un compartiment (13) interne audit corps (11) conçu pour contenir un liquide, ladite membrane (12) étant conçue pour se déformer en réponse des changements de pression du liquide qui, lors de son utilisation, est contenu dans le compartiment (13) ;
- des moyens de poussée (14a) reliés par voie mécanique à ladite membrane (12) et audit corps (11) pour exercer sur au moins une portion opérationnelle préréglée (A) de ladite membrane (12), une force prédéterminée (B) possédant une direction de contrainte (C) prédéfinie par rapport audit corps (11) ;
- des moyens de guidage (14b) reliés audit corps et à ladite membrane (12) pour guider ladite portion opérationnelle (A) par rapport audit corps (11) ;
- un élément de renforcement (15) relié à la portion opérationnelle (A) de ladite membrane (12) ou réalisé en une seule pièce avec celle-là ;
dans lequel la portion opérationnelle (A) de ladite membrane (12) entre en contact avec ledit élément de renforcement (15) et ladite membrane (12) comprend en outre une portion de liaison (D) s'étendant le long du périmètre de ladite portion opérationnelle (A) et reliée à cette dernière et audit corps (11), lesdits moyens de guidage (14b) comprenant des moyens de retenue reliés à ladite portion opérationnelle (A) et audit élément de renforcement (15) pour contrecarrer le glissement de ce dernier par rapport à ladite portion opérationnelle (A) dans une direction perpendiculaire à ladite direction de contrainte (C) ; **caractérisé en ce que** lesdits moyens de retenue comprennent un cadre (17) faisant saillie par rapport à une face de ladite membrane (12), périmétrique par rapport à ladite portion opérationnelle (A), et définissant un siège (18) qui est configuré par rapport audit élément de renforcement (15) pour épouser la forme de ce dernier, ladite membrane (12) possédant, en correspondance avec ledit cadre (17), une résistance supérieure à la flexion.

2. Réservoir de détente selon la revendication 1, **caractérisé en ce que** :
- lesdits moyens de poussée (14a) comprennent au moins un élément de poussée (19) manifestant un allongement élastique dans une direction de déformation et une rigidité dans des directions perpendiculaires à ladite direction de déformation ;
- lesdits moyens de guidage (14b) comprennent des moyens de liaison (20) reliant ledit au moins un élément de poussée (19) audit corps (11) et à ladite membrane (12) et appropriés pour maintenir une orientation fixe de ladite direction de déformation par rapport audit corps (11) et à ladite membrane (12) pour guider, dans ladite direction de déformation, le déplacement de la portion opérationnelle (A) de ladite membrane (12) par rapport audit corps (11), induit par un changement de pression du liquide qui, lorsqu'on l'utilise, est contenu dans ledit compartiment (13) ;
ladite direction de déformation définissant ladite direction de contrainte (C).

3. Réservoir de détente selon la revendication 2, **caractérisé en ce que** ledit au moins un élément de poussée (19) comprend un ressort hélicoïdal (21), ledit moyen de liaison (20) comprenant :
- un élément mâle (22) fixé audit corps (11) ou réalisé en une seule pièce avec ce dernier et inséré dans au moins un enroulement terminal d'une première extrémité (21a) dudit ressort (21) ;
- une bague (23) fixée en position circulaire ou réalisée en une seule pièce avec ledit élément de renforcement (15) et couplée avec au moins un enroulement terminal d'une seconde extrémité (21b) dudit ressort (21) ;
ledit élément mâle (22) et ladite bague (23) étant configurés pour contrecarrer l'oscillation des extrémités dudit ressort (21) autour d'un axe perpendiculaire à ladite direction de déformation.

4. Réservoir de détente selon la revendication 3, **caractérisé en ce qu'**il comprend des moyens pour régler la précontrainte dudit ressort (21).

5. Réservoir de détente selon l'une quelconque des revendications 3 et 4, **caractérisé en ce que** ledit ressort (21) est un ressort hélicoïdal (21), est conique et possède une configuration conditionnée dans laquelle chacun de ses enroulements est logé dans un enroulement adjacent enroulement pour minimiser sa dimension dans la direction de déformation.

6. Réservoir de détente selon l'une quelconque des revendications 3 à 5, **caractérisé en ce que** ledit élément de renforcement (15) est un élément en forme de plaque qui possède une première face qui vient buter contre la portion opérationnelle (A) de ladite membrane (12) et une seconde face munie de ladite bague (23).

7. Réservoir de détente selon l'une quelconque des revendications précédentes, **caractérisé en ce que** ledit corps (11) comprend :
- une première calotte (11a) ;
- une seconde calotte (11b) fixée à la périphérie de ladite première calotte (11a) et de ladite membrane (12) ;
ladite membrane (12) délimitant avec ladite première calotte (11a) délimitant ledit compartiment (13) pour le liquide et délimitant avec ladite seconde calotte (11b) une chambre opérationnelle (24) dans laquelle sont logés lesdits moyens de poussée (14a).
